# EUROPEAN PATENT APPLICATION

(11) **EP 1 378 768 A2**
(43) Date of publication of application: **07.01.2004**
(21) Application number: 03014242.6
(22) Date of filing: 25.06.2003
(51) Int. Cl.: G01V 3/11

(54) **Apparatus for detecting metal objects being put into a trash can**

(30) Priority: 28.06.2002 US 392215 P
(71) Applicant: Cotter, James E., Boca Raton, FL 33486 (US)
(72) Inventor: Cotter, James E., Boca Raton, FL 33486 (US)
(74) Representative: Fiener, Josef

(57) **Abstract**

A detector (100) for finding metal objects being disposed in garbage includes a driving coil, a receiving coil corresponding to an antenna element (120), and a voltage detector. The driving coil encircles an opening formed in a ring-like lid (102) for the trashcan. The controller connects to the driving coil and oscillates a driving current in the driving coil. A receiving coil is disposed parallel to the driving coil and has a current induced therein from the driving current in the driving coil. The voltage detector connects to the coil and detects changes in voltage of the inducted current when a metal object passes through the driving coil and the receiving coil. The coils can be constructed from a flat ribbon coil containing a plurality of parallel wires. The flat ribbon coil can be supported under a trashcan lid by a support.

## Description

### TECHNICAL FIELD OF THE INVENTION

The invention relates to metal detectors for detecting flatware, medical instruments and other metal content articles (objects), particularly if they are being disposed with garbage.

### BACKGROUND OF THE INVENTION

In restaurant kitchens, tens of thousands of dollars of flatware can be accidentally disposed with other garbage. Similarly, in medical, business, home and industrial application substantial quantities of metallic items are unintentionally disposed. Generally, metal detectors embody one of three technologies: very low frequency (VLF), pulse induction (PI), and beat-frequency oscillation (BFO). A survey of these technologies is provided by Tyson at www.howstuffworks.com/metal-detector. htm. Numerous applications of metal-detector technology have been constructed.
USP 5,576,621 ("Clements") discloses a hinged metal detection cover for a receptacle. The detection cover includes a coil surrounding the opening to a trash bag suspended below the cover. When a ferromagnetic object moves through the coil a current is induced. A controller compares the voltage with a reference. If the difference exceeds a preselected limit, an alarm sounds. The unit can be automatically recalibrated. The unit is battery powered. The unit is useful in the medical field to prevent the inadvertent disposal of surgical instruments. As noted in Clements (column 5, lines 10-40).

The detection circuitry includes a primary coil L1 through which current initially flows. The conduction of transistor Q1 and resistor R2 and variable resistor R3 control current through the primary coil L1. The momentary current through the primary coil L1 induces a voltage in the detector coil L2, which controls the conduction of transistor Q1, which in turn again pulses current through the primary coil L1. The frequency of the oscillations is determined by the parallel resonant frequency of the primary coil L1 and capacitor C1. The detector coil L2 voltage also controls the conduction of transistor Q2, which generates a D.C. voltage V1 through resistors R4 and capacitor C3 which is directly proportional to the induced voltage in the detector coil L2. When a metal object enters the magnetic field of primary coil L1 and detector coil L2, eddy currents are produced in that object. These eddy currents affect the magnetic field and the induced voltage in the detector coil L2. This change is detected in the D.C. voltage V1.

The detector circuitry includes an auto calibration feature to prevent drift and maintain the accuracy of the detector over time, without allowing transient fluctuations to impair detector performance An amplifier U1 compares the voltage V1 with a reference voltage set up by resistors R5 and R6. The amplifier output swings high or low and is integrated through resistor R9 and capacitor C5. The output then conducts through resistor R10 to transistor Q1, which influences the amount of current pulsed through the primary coil L1. The action of this network maintains the voltage V1 to match the reference voltage at the amplifier U1. Since fluctuations are integrated over time, the network does not react to transient changes, only to long term changes, and thus serves to stabilize the sensitivity of the metal detector.

USP 5,001,425 ("Beling") discloses a ferromagnetic object detector with comparison of signal maximum from a pair of detection coils. The detector includes a cover with an opening, an inner coil, and an outer coil. When a ferromagnetic object moves downward through the coil, a greater current is inducted in the inner coil than the outer coil. When the current is greater in the inner coil than the outer, an alarm sounds. When a ferromagnetic object approaches the coil but does not pass through the coil, no alarm sounds because the current induced in the outer coil is greater than the current in the inner coil. An electrical timer holds the maximum current induced for each coil for a period. The maximum values are then used for more accurate comparison. The inner detector coil 26 and the outer detector coil 28 are mounted in co-planarity on the base. As noted in Beling:

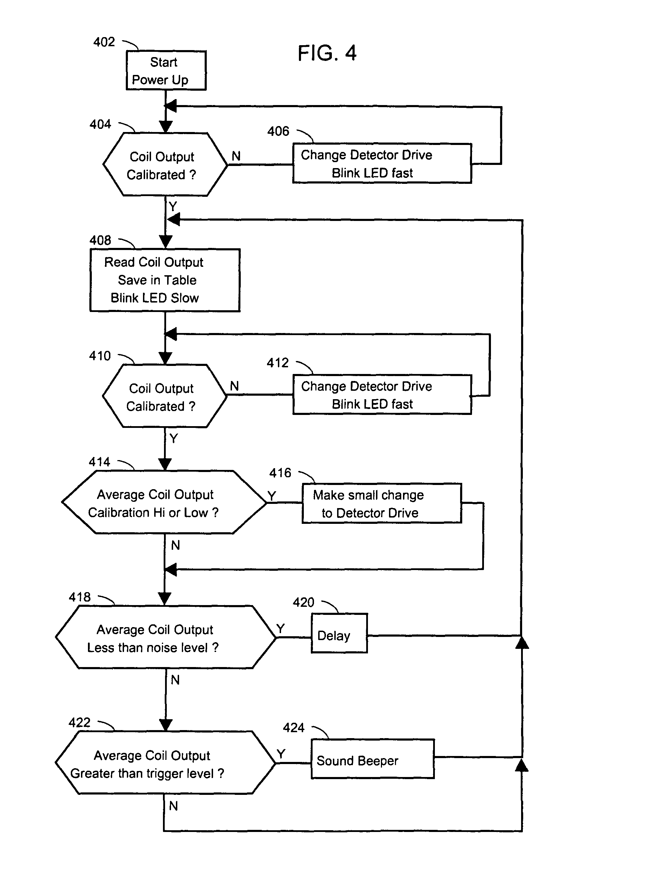

Referring now to FIG. 4, the block diagram for the electrical components of detector 10 shows that inner detector coil 26 and outer detector coil 28 are electrically connected in parallel to signal processing loops 54 and 56, respectively. Coils 26 and 28 comprise any suitable conductor, such as copper. Loops 54 and 56 are constructed and function identically, with one exception which is noted below. It will therefore be understood that discussion of the signal processing of loop 54 will apply equally to the signal processing of loop 56. (column 4, lines 5-14)

In light of the above disclosures, it will be appreciated that when ferromagnetic objects pass through passageway 30 they are nearer to inner detector coil 26 than they are to outer detector coil 28. Consequently, the inner coil 26 will generate a voltage signal whose absolute value is greater than the corresponding signal from the outer coil 28. This allows the determination that a metal object has passed through the passageway 30. On the other hand, metal objects which are outside base 16, and hence not in passageway 30, cause the outer coil 28 to generate a signal of greater absolute value than the corresponding signal from the inner coil 26. This will be so as long as the ferromagnetic object is closest to the outer coil 28 and regardless of how close this might be. By using a comparator to sense the relative magnitudes of the signals generated by its inner and outer coils, the detector 10 can ignore the presence of metal objects that are only near the detector 10 while also providing an alarm to tell the operator whenever a metal object has passed through the passageway 30. (column 6, line 62 through column 7, line 13)

USP 4,742,339 ("Baziuk") discloses cutlery detector and alarm. The detector includes a ring that can be located above or around a trashcan. A current is passed through the ring. When a ferromagnetic object passes through the ring a current is inducted in the ring. If the inducted current exceeds a threshold, an alarm sounds. As noted in Baziuk (Abstract):
A cutlery detector device is provided for detecting metal objects discarded as trash along with non-metallic trash material. The detector device includes a metal detecting ring or the like mounted at the top of a trash receptacle, in combination with circuitry adapted to trigger an alarm upon passage of a metal object such as a cutlery item into the trash receptacle. A counter may also be provided to count the number of metal objects placed into the trash receptacle.

The following US patents are cited as being of interest: 6,150,810; 6,043,647; 5,689,184; 5,659,247; 5,576,621; 5,521,583; 5,498,958; 5,432,444; 5,426,363; 5,406,259; 5,276,396; 5,189,366; 5,001,425; 4,894,618; 4,868,499; 4,742,339; 4,659,989; 4,563,645; and 4,563,644.

### BRIEF DESCRIPTION (SUMMARY) OF THE INVENTION

It is a general object of the invention to provide an improved metal detector. It is a further object of the invention to provide a flatware or other metal (hereinafter generally referred to as "flatware") detector for trashcans.

According to the invention, apparatus is provided for detecting metal objects being put into a trash can. The apparatus comprises:
a generally planar ring having an outer surface, an inner surface, a periphery, an outer cross-dimension "D" across the periphery, an opening, an inner cross-dimension "d" across the opening, and an axis, the ring being adapted in use to sit atop the trash can;
an antenna support element, in the form of a ring, disposed about the opening in the ring, and
secured to the inner surface of the ring, wherein:
   the antenna support element comprises an insulating material, and
   the antenna support element encircles the opening and has a diameter "**x**", which is slightly greater than the diameter "**d**" of the opening.

Various features of the invention include:
- the ring may be round.
- the the antenna support element may be secured to the inner surface of the ring with a plurality of rivet-like fasteners and/or with glue.
- two handles may be disposed at diametrically-opposed positions at the periphery of the ring.
- a lip extends downward from the periphery to keep the ring properly positioned atop the trash can.
- a circuit module disposed on the outer surface of the ring.
- an annunciator disposed on the outer surface of the ring.
- an output coil (L1) disposed on the antenna support element and a receiving coil (L2) disposed on the antenna support element.
- the output and receiving coils may be substantially coplanar, and have substantially the same diameter as one another.

According to an aspect of the invention, an antenna element is disposed nearly entirely around the antenna support element. A circuit module is disposed on the outer surface of the ring, and a cable extends from the antenna element, on the inside surface of the ring, through the ring, to the circuit module.

According to an aspect of the invention, the antenna element comprises a ribbon cable having two ends; the two ends of the ribbon cable are disposed on a printed wiring board (PWB); and individual conductors of the ribbon cable are electrically connected to traces (128) on the PWB.

Selected ones of the conductors of the ribbon cable may be connected in series with selected other ones of the conductors of the ribbon cable.

Further according to the invention, the detector includes a driving coil encircling an opening formed in a disposal or collection device, referred to hereafter generally as a trashcan. A controller connects to the driving coil and provides an oscillating driving current in the driving coil. A receiving coil is disposed parallel to the driving coil and inducts a current therein from the driving current in the driving coil. A voltage detector connects to the coil and detects changes in voltage of the inducted current when a piece of flatware passes through the driving coil and said receiving coil.

The voltage detector can be set to detect any deviation in voltage in the receiving coil. However, because metallic objects cause an increase in voltage, the detector can be programmed to detect only positive changes (i.e. increases) in the voltage of the receiving coil. The voltage detector can lockout further detection for a period after a detection to prevent repeated alarms.

In accordance with a further object of the invention, the driving coil includes a circuit board, a plurality of parallel wires having two opposing ends, and caps. The caps connect a respective end of each wire to the circuit board. The circuit board is wired to connect the wires preferably as a solenoid. By using the connector, a flat solenoid can be easily manufactured. The parallel wires can be covered with an insulator to protect them and to insulate them from neighboring wires.
Likewise, the receiving coil can include a circuit board, a plurality of parallel wires having two opposing ends, and caps. The caps connect a respective end of each wire to said circuit board. The circuit board connects the wires preferably as a solenoid.
Preferably, both the driving coil and the receiving coil are manufactured by one ribbon contacting a plurality of wires. The more wires that are included the more turns each solenoid includes and the more sensitive the coils become.

In accordance with a further object of the invention, the detector is connected to a trashcan lid. The trashcan lid has a hole formed therein and covers said hole of the trashcan. The driving coil and the receiving coil encircle the hole of said trashcan lid. By attaching the detector to a trashcan lid, the detector can be retrofitted to existing trashcans. Furthermore, the lid containing the sensitive electronics can be separated from the trashcan when the trashcan is cleaned.
In accordance with a further object of the invention, the detector includes a support connected to the trashcan lid and encircling the hole in said trashcan lid. The support is a durable, resilient ring that encircles the hole in the trashcan lid. The driving and receiving coils can lie on a support, supporting said driving coil and said receiving coil. While other means are possible contemplated, the support can be riveted to the trashcan lid.

In accordance with a further object of the invention, the controller includes a power source for generating a current to power the oscillating coil. Preferably, the power source is a battery. A power indicator, such as an LED can be used to indicate when the controller is being powered. A cutoff alarm can be included to indicate when the power source has been disconnected. This prevents people from tampering with the detector by removing the battery. A capacitor can be included, which is charged by the power source can power the cutoff alarm when the power source is interrupted.

In accordance with a further object of the invention, the detector includes a compensator. The compensator continuously calibrates the detector. The detector can be calibrated by continuously adjusting the gain so that fluctuations in voltage do not exceed a given amount. In addition, if large metal objects or electrical motor are moved near the detector, the compensator can correct for a large, sustained change in the voltage being detected. The compensator corrects for such changes when it detects a persistent change in the voltage lasting longer than a given period. If a large, persistent change occurs for longer than the given period, the compensator will attempt to calibrate the detector. If the compensator is unable to calibrate the detector, then an indicator such as an LED is lit to show that the detector is not calibrated.

In accordance with a further object of the invention, the detector includes an indicator such as an LED or audio alarm connected to the voltage detector. The indicator notifies users when the detector detects a change in voltage in the receiving coil.

Although the invention is illustrated and described herein as embodied in a flatware detector for trashcans, it is nevertheless not intended to be limited to the details shown, since various modifications and structural changes may be made therein without departing from the spirit of the invention and within the scope and range of equivalents of the claims.

The construction and method of operation of the invention, however, together with additional objects and advantages thereof will be best understood from the following description of specific embodiments when read in connection with the accompanying drawings.

### BRIEF DESCRIPTION OF THE DRAWINGS

Reference will be made in detail to preferred embodiments of the invention, examples of which are illustrated in the accompanying drawings. The drawings are intended to be illustrative, not limiting. Although the invention will be described in the context of these preferred embodiments, it should be understood that it is not intended to limit the spirit and scope of the invention to these particular embodiments.

Often, similar elements throughout the drawings may be referred to by similar references numerals. For example, the element 199 in a figure (or embodiment) may be similar or analogous in many respects to an element 199A in another figure (or embodiment). Such a relationship, if any, between similar elements in different figures or embodiments will become apparent throughout the specification, including, if applicable, in the claims and abstract. In some cases, similar elements may be referred to with similar numbers in a single drawing. For example, a plurality of elements 199 may be referred to as 199A, 199B, 199B, etc.

Conventional electronic components may be labeled with conventional schematic-style references comprising a letter (e.g., A, C, R) indicating the type of electronic component (e.g., amplifier, capacitor, resistor, respectively) followed by a number indicating the iteration of that element (e.g., "1" meaning a first of typically several of a given type of electronic component). Components such as resistors and capacitors typically have two terminals, which may be referred to herein as "ends". In some instances, "signals" are referred to, and reference numerals point to lines which carry said signals.

The structure, operation, and advantages of the present preferred embodiment of the invention will become further apparent upon consideration of the following description taken in conjunction with the accompanying drawings.
**Figure 1A** is a top view of a detector, according to the invention.
**Figure 1B** is a side cross-sectional view of the detector of **Figure 1A**, with lid (exploded) and
showing a trash container upon which the detector is disposed, according to the invention.
**Figure 1C** is detailed partial bottom view of the detector of **Figure 1A**.
**Figure 1D** is a detailed view of a portion of the detector shown in **Figure 1B**.
**Figure 2** is a view of an antenna (coil) board portion of the detector of **Figure 1A**.
**Figure 3** is a schematic of an embodiment of the detector, according to the invention.
**Figure 4** is a flowchart illustrating operation of the detector, according to the invention.

### DETAILED DESCRIPTION OF THE INVENTION

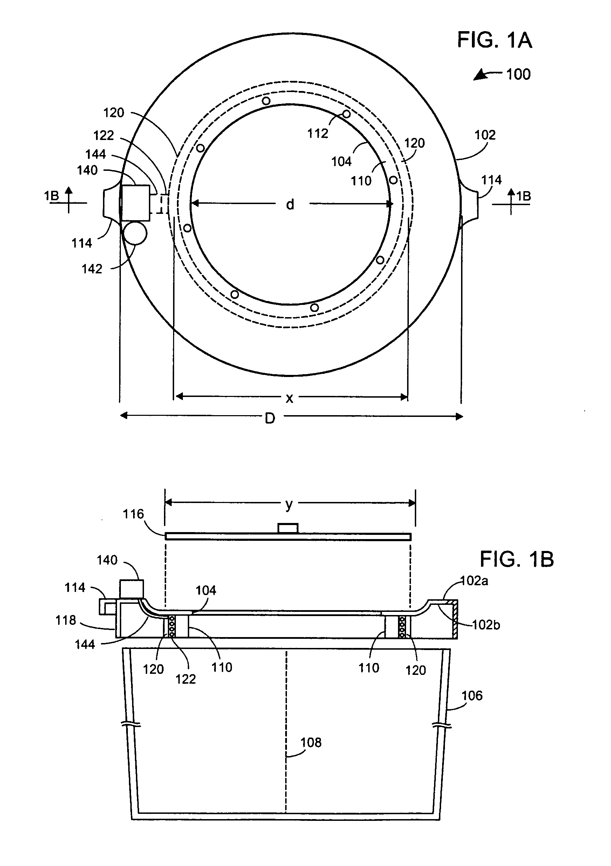

**Figures 1A** and **1B** illustrate an embodiment of the detector 100 of the present invention, in top and side cross-sectional views, respectively. Physically, the detector 100 is essentially in the form of a garbage can lid 102, preferably made of plastic (a non-ferrous material), and having a central opening 104 so that articles (garbage) can be deposited into the garbage can 106 itself (also preferably made of plastic) with the lid 102 in place atop the can 106. The garbage can 106 is shown as being generally cylindrical, having an axis 108. The lid 102 has a diameter "**D**" , which is larger than the diameter of the garbage can 106, so that the lid 102 can sit (be disposed, rest) atop the garbage can 106.

The lid 102 is generally in the form of a planar, round ring, having an outer surface 102a, and an inner surface 102b. The central opening 104 in the lid 102 has a diameter "d". The dimension "d" is less than the dimension "D" (d<D), such as approximately 50-75% of the dimension "D". For a round ring, as shown, the dimensions "D" and "d" are diameters. The overall purpose of the detector 100 is to detect, and alert a user to, metal objects being put into the trash can 106. This includes, but is not limited to, flatware, medical instruments, etc.

It is within the scope of the invention that the lid 102 is not round, but rather another shape, such as rectangular, in which case "D" would be a cross-dimension of the lid across its periphery, and the opening would have a corresponding cross-dimension "d" across the opening.
An antenna support element 110, in the form of a ring, is disposed about the opening 104 in the lid 102, on the inner (bottom) surface 102b of the lid 102. The antenna support element 110 encircles the opening 104, and has a diameter "x", which is slightly greater than the diameter "d" of the opening. The antenna support element 110 is held (secured) to the inner surface 102b of the lid 102 in any suitable manner, such as with a plurality of rivets, or rivet-like fasteners 112. The antenna support element 110 is preferably formed of an insulating material (e.g., neoprene, plastic). The rivets 112 are preferably of an insulating material. The antenna support element 110 can also be secured with glue to the inner surface 102b of the lid 102.

Two handles 114 are suitably disposed at diametrically opposed positions at the exterior (periphery) of the lid 102, to facilitate handling the lid 102, such as lifting the lid 102 from the can 106. The lid 102 is suitably an off-the-shelf no. 2645 lid from Rubbermaid Corporation (Winchester, Virginia) for Brute-tm 44 gallon container no. 2643, modified as described herein.

A disk-like closure (or lid) 116 (see **Figure 1B**) is provided for closing the opening 104 in the lid 102. The closure 116 has a diameter "**y**", which is slightly greater than "**d**". The dimension "**y**" may be approximately equal to, but is not necessarily related to the dimension "**x**". The dimension "**y**" is big enough so that the closure 116 does not fall into the opening 104. The closure 116 could be hinged to the lid 102. The lid 102 itself has a lip 118 extending downward from its periphery to keep it properly positioned atop the garbage (trash) can 106.

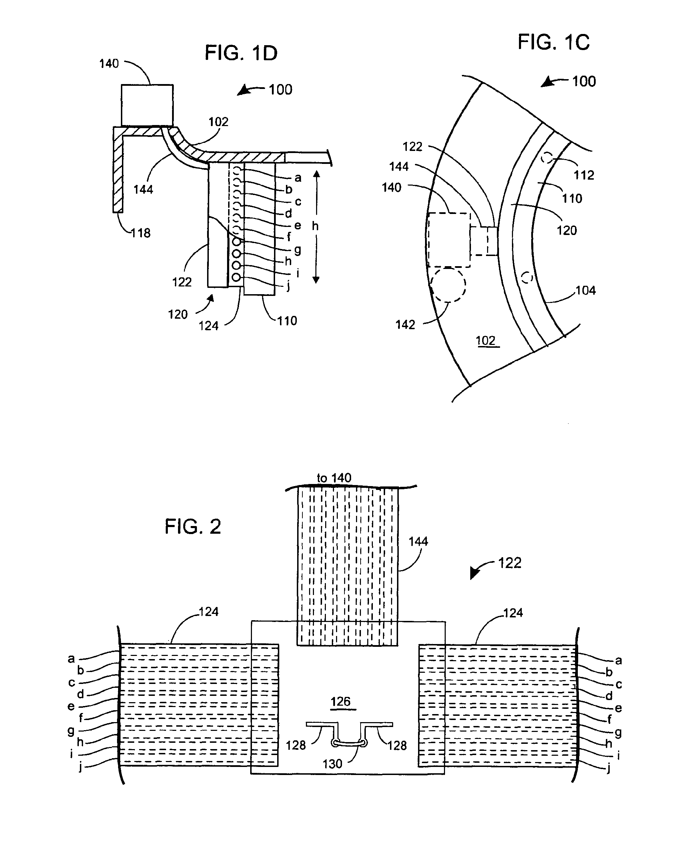

An antenna element 120, comprising a driving coil and a receiving coil, discussed in greater detail hereinbelow, is disposed circumferentially, nearly entirely around the antenna support element 110, and therefore has a diameter substantially equal to "x". The antenna element 120 has two ends. An antenna module 122 is disposed at the end(s) of the antenna element 120, as discussed in greater detail hereinbelow. Since the antenna element 120 is mounted to the antenna support element 110 which encircles the opening 104 in the lid 102, the antenna element 120 itself encircles the opening 104 in the lid 102. As best viewed in Figure 2, the antenna element has an axial height "h".
A circuit module 140 and associated annunciator (buzzer, beeper) 142 is disposed on the exterior (outer) surface 102a of the lid (ring) 102. A cable 144 extends from the antenna element 120, on the inside surface 102b of the lid 102, then through the lid 102, to the circuit module 140.

**Figures 1C** and **1D** are enlarged partial bottom, and enlarged partial cross-sectional views of the detector 100, which are generally intended to better illustrate particulars of the antenna element 120 and cable 144. The handle 114 is omitted from these two views.

As best viewed in **Figure 1D**, the antenna element 120 is suitably a ribbon cable 124, having a plurality (e.g., 10) of conductors (labeled simply "a","b","c","d","e","f',"g","h","i","j"). In the view of **Figure 1D**, the antenna module 122 is shown partially cutaway so as to better view the individual conductors of the ribbon cable 124. The number of individual conductors in the ribbon cable 124 is at least 2, preferably 6-12, and more preferably 8-10. Each conductor a-j of the antenna element ribbon cable 124 extends circumferentially around the antenna support element 110, and all of the conductors a-j lie generally in a single plane which is normal to the axis 108, but they are slightly axially displaced from one another. As described in further detail hereinbelow, a driving (output) coil comprises a first subset of the ribbon cable 124 conductors a-j, and a receiving coil comprises a second subset of the ribbon cable 124 conductors a-j.

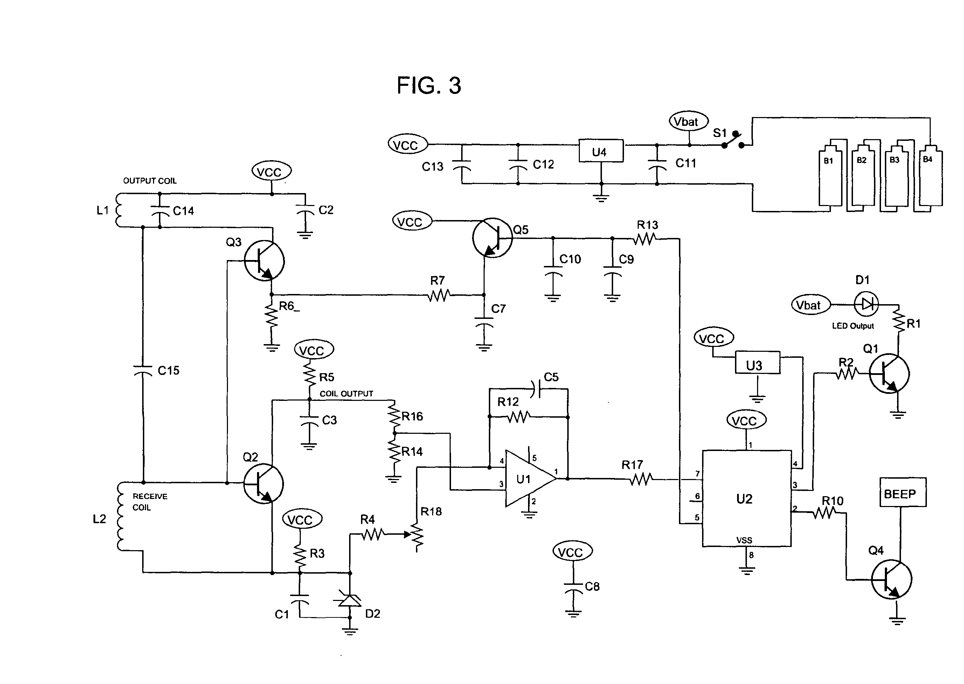

**Figure 2** (corresponding to Fig. 3 of the provisional) shows a more detailed view of the antenna module 124 (generally referred to in the provisional as "connector 8"). The antenna module 124 includes a printed wiring board (PWB) 126, (generally referred to in the provisional as "circuit board" 9). As mentioned before, the antenna element 120, i.e. the ribbon cable 124 extends nearly entirely around the antenna support element 110, and the antenna module 122 is disposed at the end(s) of the antenna element 120. The two ends of the ribbon cable 124 are disposed on the PWB 126, and the individual conductors a-j of the ribbon cable are electrically connected in any suitable manner (e.g., press-on connectors, or soldered to pads, not shown) to traces 128 (one shown) on the on the PWB 126.

The antenna ribbon cable 124 makes one "pass" around the antenna support element 110. For an antenna ribbon cable 124 having 10 conductors (a-j), each conductor having two ends, there are 20 terminations on the PWB 126. Each conductor (a-j) forms an individual, single loop around the antenna support element 110. The traces on the PWB 126 are arranged to connect selected ones of the loops in series with selected other ones of the loops. In this manner, two or more loops can be connected in series with one another. The PWB is suitably provided with jumpers, 139 (one shown) to "customize" the interconnections between individual loops. In this manner, selected ones of the conductors **a-j** of the ribbon cable 124 can be connected in series with one another to form the driving coil, and selected other ones of the conductors a-j of the ribbon cable 124 can be connected in series with one another to form the receiving coil. The antenna ribbon cable 124 suitably has 10 conductors, 28 gauge (awg), at 50 mil pitch. The individual conductors of the ribbon cable are parallel to one another. Traces and jumpers are well known in the art of PWBs.

For example, for the driving coil, 4 loops (a-d) could be connected in series with one another, and for the receiving coil, 6 loops (e-j) could be connected in series with one another. Or, for the driving coil, 3 loops (a-c) could be connected in series with one another, and for the receiving coil, 6 loops (e-j) could be connected in series with one another, and the loop d could be unused (a so-called "neutral" wire). In these previous examples, the series-connected loops are "consecutive" with one another. Altematively, the loops could be connected in series with one another, and the driving coil and receiving coil could be "interleaved", such as by connecting loops a,c,e,g,i in series for the driving coil and connecting loops b,d,f,h,j in series for the receiving coil. Loops could also be connected in parallel with one another, but this is not preferred. There are many possibilities. An advantage of the present invention is that the ribbon cable 124 and PWB 126 provides simplicity and flexibility.

The cable 144 also terminates on the circuit board (PWB) 126. The function of the cable 144 is primarily to connect the driving and receiving coils to the electronic circuitry in the circuit module 140. Therefore, it only needs four conductors (notably fewer than the ribbon cable 124)- two for the driving coil and two for the receiving coil. However, it may have more conductors to provide for more flexibility of design (e.g., center-tapped coils, LED and/or beeper located at antenna module 124, etc.). The cable 144 is suitably a typical board-to-board cable.
The cable 144 extends radially outward from the antenna module 124, along the inner surface 102b of the lid (ring) 102, in a plane which is generally normal to the axis 108, the through the lid 102, into the circuit module 140, where it is connected with electronic circuitry, described hereinbelow.

An important feature of the present invention is that the driving and receiving coils are at least parallel with one another, substantially coplanar (in the same plane), and have substantially the same radius (diameter, or cross-dimension, or in this case, footprint) as one another.

Some exemplary, approximate values for the dimensions **"D", "d", "x", "y", "h"**, in inches " (centimeters in parentheses) and gallons (liters in parentheses) are:

| **D** | **d** | **x** | **y** | **h** | capacity of can (106) |
|---|---|---|---|---|---|
| 24" (60cm ) | 15.5" (39) | 17.25" (43) | 15.5" (39) | 0.5" (1.25) | 44 gal (166 L) |
| 26" (65cm) | 15.5" (39) | 17.25" (43) | 15.5" (39) | 0.5" (1.25) | 55 gal (207 L) |
| 19" (48cm) | 13" (33) | 14.5" (36) | 15.5" (39) | 0.5" (1.25) | 20 gal ( 75 L) |
| 22" (55cm) | 13.5" (34) | 15.5" (39) | 15.5" (39) | 0.5" (1.25) | 32 gal (89 L) |
| 20" (50cm) | 7.25" (18) | 16" (40) | None | 0.5" (1.25) | 23 gal ("slim jim") |

As an alternative to using ribbon cable, each of the driving and receiving coils could be made simply by winding a length of wire, a selected number of times around the antenna support element (110), and terminating its two ends on the PWB (126). The antenna support element could have grooves (or a single spiral groove) for receiving the wire. This would similarly result in both of the driving and receiving coils being substantially coplanar, and having substantially the same radius, the wires of all the coils being substantially parallel to one another. As a further alternative, rather than wrapping one wire around the antenna support element a number of times for a number of turns (loops), a plurality of wires could be looped once around the antenna support element and terminated, at both ends, on the PWB to be series interconnected with one another on the PWB, much in the manner of the ribbon cable (124) described hereinabove.

### Circuit Description and Operation

**Figure 3** (corresponding generally to Fig. 6 of the provisional) illustrates an embodiment of the circuitry (300) for controlling the detector 100. The circuitry includes a microprocessor (U2), 2 coils (L1, L2) and other electronic components (transistors, resistors, capacitors, etc.), all connected as shown.
Generally, the circuitry of the detector 100 is a two coil (driving, receiving) metal detector circuit where one coil (driving) is energized, and the coupling between the two coils is measured. When an object (particularly metal, more particularly ferrous) enters the plane of the coils, the coupling is measurably affected. Metal detector circuitry is well known, and some examples have been referenced hereinabove.

More specifically, the circuit of the present invention generally operates as follows. Transistor Q3, capacitor C14 and the combined inductence of coils L1 and L2 forms an oscillator. Capacitor C15 controls the capacitance between L1 and L2 and is used to stabilize the oscillator to its fundamental frequency. The oscillator changes it's drive current with changes in the coupling between L1 and L2. These changes are a result of metal objects in the approximately same plane has the two coils. The changes in drive is measured by the changes in duty cycle of the output of transistor Q2. This output is converted to an analog voltage by capacitor C3 and resistor R5. Electronic noise (e.g., turning on and off lights, motors and heaters) tends to produce large momentary negative pulses of the output voltage. This is used to reduce false triggering of the device. Op Amp U1 is used to amplify and filter this output. Resistor R18 is used to set the sensitivity (smallest object to detect). Resistor R18 is a factory setting depending on the application and size of antenna coil use. R18 is not set by the customer in the field. Device D2 a voltage reference is used to reduce the current consumption and noise produced by the traditional forward biased diode. The oscillator drive current is adjusted by an analog voltage produced by adjusting the duty cycle of a ouput pin of the microprocessor U2. Resistor R13, capacitor C9 and capacitor C10 are used to convert this to an analog voltage. Transistor Q5 is a output current buffer, resistor R7 sets the calibration range. The calibration range is set so that the coil can be adjusted within a range of reasonable outside influences and small enough so that small changes in calibration do not trigger the device. The LED and beeper are powered directly from the batteries (using Q1 and Q4) to reduce noise on VCC. Variations due to temperature and electronic noise are canceled out by constantly adjusting the oscillator drive with the microprocessor. If VCC falls below a range set in voltage sense device U3, a low battery condition will be displayed.

Exemplary component types/values, and functions, for the circuit are:

| **Label** | **Component** | **Value** | **Comment (Annotation)** |
|---|---|---|---|
| | | | |
| L1 | Output Coil | 3 turns | creates electromagnetic sensing field |
| L2 | Receive Coil | 6 turns | receives power from L1 |
| | | | |
| Q1 | Transistor | | Drives the LED |
| Q2 | Transistor | | Sense Receive Coil. Duty Cycle. With R5/C3 creates analog coil output voltage. |
| Q3 | Transistor | | Drives the Output Coil |
| Q4 | Transistor | | Drives the Beeper |
| Q5 | Transistor | | Current Buffer |
| | | | |
| U1 | Op amp | | Linear Gain. Adjusted with R18. |
| U2 | microprocessor | | Microchip PIC12C672 |
| U3 | voltage sense | | MCP809 Low Battery Detect |
| U4 | 5v Regulator | | regulates voltage |
| | | | |
| D1 | LED | | indicates state of operation |
| D2 | Voltage Ref | 1.2 volts | LM336 |
| | | | |
| R1 | Resistor | 750 ohm | LED current limiting |
| R2 | Resistor | 2k ohm | current limiting |
| R3 | Resistor | 51k ohm | current limiting of voltage ref (D2) |
| R4 | Resistor | 2k ohm | sets maximum gain of U1 |
| R5 | Resistor | 51k ohm | input filter |
| R6 | Resistor | 1.07k ohm | set current, L1 |
| R7 | Resistor | 10k ohm | set calibration range |
| R10 | Resistor | 2k ohm | current limiting |
| R12 | Resistor | 100k ohm | gain feedback of U1 |
| R13 | Resistor | 100k ohm | output filter |
| R14 | Resistor | 100k ohm | with R16, halves the input voltage |
| R16 | Resistor | 100k ohm | see R14 |
| R17 | Resistor | 750 ohm | limits output of U1 |
| R18 | Resistor | 20k ohm | sensitivity adjustment (gain) |
| | | | |
| C1 | Capacitor | 0.1 µF | bypass reference voltage (see R3) |
| C2 | Capacitor | 0.1 µF | bypass capacitor. filters VCC |
| C3 | Capacitor | 1.0 µF | input filter |
| C5 | Capacitor | 0.1 µF | lowpass filter |
| C7 | Capacitor | 0.1 µF | bypass calibration voltage |
| C8 | Capacitor | 0.1 µF | bypass capacitor, filtering VCC |
| C9 | Capacitor | 10 µF | output filter, low frequency |
| C10 | Capacitor | 0.1 µF | output filter, high frequency |
| C11 | Capacitor | 0.1 µF | bypass cap, filtering Vbat |
| C12 | Capacitor | 10 µF | bypass capacitor. filters VCC |
| C13 | Capacitor | 0.1 µF | bypass capacitor. filters VCC |
| C14 | Capacitor | 0.01 µF | L/C control coil frequency. |
| C15 | Capacitor | 220 pf | control capacitance between L1, L2 stabilize oscillation at desired frequency |
| | | | |
| S1 | switch | | turns circuit on and off |
| | | | |
| B1 | Battery | 1.5 volt | AA cell |
| B2 | Battery | 1.5 volt | AA cell |
| B3 | Battery | 1.5 volt | AA cell |
| B4 | Battery | 1.5 volt | AA cell |
| | | | |
| VCC | a voltage | 5 volt | 5 volt supply (regulated) |
| Vbat | a voltage | 6.0 - 5.2 volt | battery voltage (raw) |

**Figure 4** is a flowchart illustrating the operation of the detector 100. The steps described are executed by the microprocessor of **Figure 3**. In a first step 402, the circuit is powered up.

Next, the coil output is calibrated. During calibration, the LED is caused to blink at a first (fast) rate. It is determined in a step 404 whether the coil output is calibrated. If not (N), in a step 406 the drive to the detector is changed, and the LED is caused to blink fast. This gets the coil working, and is functionally somewhat comparable to the function of the pot R3 of the Clements (5,576,621) patent.

When the coil output is calibrated (Y), the program proceeds to a step 408 where the coil output is read and saved in a table. This accumulates values over a window of time, and is used to determine the averages, discussed below. During this step, the LED is caused to blink at a second rate (e.g., slow).

Next, in steps 410 and 412, in a manner identical to that of steps 404 and 406, the coil output is recalibrated. This covers the eventuality that the device was moved, or that a large metal object has moved into the range of the detector. In any case, it gets the coil drive in range for detecting.

Next, in step 414, the average coil output over the most recent prior few seconds (e.g., 6 seconds) is determined. If there is a small change in the coil output, in a step 416 a small change is made to the detector drive. In other words, the center of the detection range is tweaked (moved, slightly). This is functionally somewhat comparable to so-called "auto calibration" feature of the '621 patent. When the result of the test 414 is negative (N), the program proceeds to a next step 418.

Next, in the step 418, it is determined whether the average coil output is less than a noise level. If this is true (Y), indicating electronic noise, in a step 420 a small delay (e.g., 0.5 seconds) is imposed to wait until the noise passes, and the program loops back to the step 406. The steps 418 and 420 function like a filter, to discriminate electronic noise (lights and motors turned on and off). When the result of the test 418 is negative (N), the program proceeds to a next step 422.

The trigger level is any level which has been predetermined to be representative of a metal object passing through the coils, rather than a noise event. Both the trigger level and the noise level are determined by the change in the coil output, from the average.
As mentioned above, electronic noise (e.g., turning on and off lights, motors and heaters) tends to produce large momentary negative pulses of the output voltage. The electronic noise may be both positive and negative. In the case of large noise events (i.e, noise events that would generate false triggers), the noise typically starts with a negative pulse. This is why a time delay is used, rather than a rejection of negative pulses.

Next, in the step 422, it is determined whether the average coil output is greater than the trigger level. If so (Y), in a step 424 the beeper is sounded, indicating that an object has been detected. If not (N), the program loops as shown, back to the step 406, to remain alert for detecting.

The invention has been illustrated and described in a manner that should be considered as exemplary rather than restrictive in character - it being understood that only preferred embodiments have been shown and described, and that all changes and modifications that come within the spirit of the invention are desired to be protected. Undoubtedly, many other "variations" on the techniques set forth hereinabove will occur to one having ordinary skill in the art to which the present invention most nearly pertains, and such variations are intended to be within the scope of the invention, as disdosed herein.

## Claims

1. Apparatus for detecting metal objects being put into a trash can (106), comprising:
a generally planar ring having an outer surface (102a), an inner surface (102b), a periphery, an outer cross-dimension "D" across the periphery, an opening (104), an inner cross-dimension "d" across the opening, and an axis (108), the ring being adapted in use to sit atop the trash can (106);
an antenna support element (110), in the form of a ring, disposed about the opening in the ring, and secured to the inner surface of the ring.
wherein:
the antenna support element comprises an insulating material, and
the antenna support element encircles the opening and has a diameter "x", which is slightly greater than the diameter "d" of the opening.

2. Apparatus according to claim 1, wherein the ring is round.

3. Apparatus according to claim 1, further comprising:
a circuit module (140) disposed on the outer surface (102a) of the ring.

4. Apparatus according to claim 1, further comprising:
an output coil (L1) disposed on the antenna support element; and
a receiving coil (L2) disposed on the antenna support element.

5. Apparatus according to claim 4, wherein:
the output and receiving coils are substantially coplanar, and have substantially the same diameter as one another.

6. Apparatus according to claim 1, further comprising:
an antenna element (120) disposed nearly entirely around the antenna support element.

7. Apparatus according to claim 6, further comprising:
a circuit module (140) disposed on the outer surface (102a) of the ring; and
a cable (144) extending from the antenna element, on the inside surface of the ring, through the ring, to the circuit module.

8. Apparatus according to claim 6, wherein:
the antenna element (120) has two ends.

9. Apparatus according to claim 8, further comprising:
an antenna module (122) disposed at the ends of the antenna element.

10. Apparatus according to claim 8, wherein the antenna module (122) comprises:
a printed wiring board (PWB 126) disposed at ends of the antenna element 120.

11. Apparatus according to claim 10, wherein:
the antenna element comprises a ribbon cable having two ends;
the two ends of the ribbon cable are disposed on the PWB; and
individual conductors of the ribbon cable are electrically connected to traces (128) on the PWB.

12. Apparatus according to claim 11, wherein:
the traces on the PWB are arranged to connect selected ones of the conductors of the ribbon cable in series with selected other ones of the conductors of the ribbon cable.

13. Apparatus according to claim 11, further comprising:
means for connecting (128, 130) selected ones of the conductors of the ribbon cable in series with one another to form a driving coil, and for connecting selected other ones of the conductors of the ribbon cable in series with one another to form a receiving coil.

14. Apparatus according to claim 6, wherein:
the antenna element (120) comprises a ribbon cable (124) having a plurality of individual conductors ("a","b","c","d","e","f","g","h","i","j").

15. Apparatus according to claim 14, wherein:
each conductor of the ribbon cable extends around the antenna support element, and all of the conductors lie generally in a single plane which is normal to the axis (108), and the conductors of the ribbon cable are slightly axially displaced from one another.

16. Apparatus according to claim 14, wherein:
a first subset of the conductors of the ribbon cable comprises a driving (output) coil (L1), and a second subset of the conductors of the ribbon cable comprises a receiving coil (L2).

17. Apparatus according to claim 6, wherein:
the antenna element comprises a ribbon cable having conductors (a-j);
the ribbon cable makes one "pass" around the antenna support element; and
each conductor (a-j) of the ribbon cable forms an individual, single loop around the antenna support element.

18. Apparatus according to claim 17, wherein:
a driving coil comprises a first number of the loops connected in series with one another, and
a receiving coil comprises a second number of the loops connected in series with one another.

19. Apparatus according to claim 17, wherein:
the loops of the driving coil are consecutive with one another; and
the loops of the receiving coil are consecutive with one another.

20. Apparatus according to claim 17, wherein:
the loops of the driving coil and receiving coil are interleaved with one another.
